# EUROPÄISCHE PATENTSCHRIFT

(11) **EP 1 264 741 B1**
(45) Veröffentlichungstag und Bekanntmachung des Hinweises auf die Patenterteilung: **02.11.2006**
(21) Anmeldenummer: 02010167.1
(22) Anmeldetag: 14.05.2002
(51) Int. Cl.: B60R 21/16

(54) **Gassack für ein Fahrzeuginsassen-Rückhaltesystem**
Airbag for a vehicle occupant restraint system
Coussin gonflable pour un système de retenue d'un passager de véhicule

(30) Priorität: 08.06.2001 DE 20109596 U
(43) Veröffentlichungstag der Anmeldung: 11.12.2002
(73) Patentinhaber: TRW Automotive Safety Systems GmbH, 63743 Aschaffenburg (DE)
(72) Erfinder: Neupert, Ralph, 63839 Kleinwallstadt (DE); Lehmann, Michael, 63739 Aschaffenburg (DE)
(74) Vertreter: Sties, Jochen

(56) Entgegenhaltungen:
- EP-A- 0 861 762
- WO-A-93/16902
- DE-U- 29 700 804
- DE-U- 29 702 441
- US-A- 5 044 663

## Beschreibung

Die Erfindung betrifft einen Gassack für ein Fahrzeuginsassen-Rückhaltesystem, der aus einem zusammengelegten Zustand in einen entfalteten Zustand überführt werden kann, mit einer ersten Kammer, die eine Einblasöffnung aufweist, und einer zweiten Kammer, die mit der ersten Kammer in Strömungsverbindung steht. Die Erfindung betrifft auch eine Baugruppe bestehend aus einem solchen Gassack und einer Fahrzeugkarosserie.

Zweikammer-Gassäcke dieses Typs sind in den verschiedensten Ausgestaltungen bekannt (siehe z.B. EP-A-0 861 762 oder WO-A-93/16902). Die erste Kammer kann beispielsweise als Körperkammer verwendet werden, die den Oberkörper eines Fahrzeuginsassen zurückhält, und die zweite Kammer kann anderen Körperteilen zugeordnet sein.

Die Aufgabe der Erfindung besteht darin, einen bekannten Zweikammer-Gassack derart weiterzubilden, daß die dem Fahrzeuginsassen bereitgestellte Rückhaltewirkung verbessert ist.

Zu diesem Zweck ist erfindungsgemäß vorgesehen, daß die erste Kammer im entfalteten Zustand allgemein langgestreckt ist und die zweite Kammer mit der ersten Kammer an einer Seitenfläche der ersten Kammer verbunden ist, so daß der Gassack asymmetrisch ist, und daß ein Fangband vorgesehen ist, das sich über die Außenseite der zweiten Kammer und über einen Teil der Außenseite der ersten Kammer erstreckt. Die zweite Kammer, die asymmetrisch als "Ohr" an der ersten Kammer angeordnet ist, bietet eine Rückhaltewirkung speziell für eine Seite des Kopfes eines Fahrzeuginsassen. Das Fangband, das sich etwa quer zur Längsrichtung der zweiten Kammer und im entfalteten Zustand des Gassacks wenigstens teilweise im Abstand von der ersten Kammer erstreckt, bildet eine spezielle Aufprallfläche für den Kopf des Fahrzeuginsassen, die nach dem Aufprall des Kopfes des Fahrzeuginsassen die zweite Kammer zu dessen Kopf hin zieht.

Der erfindungsgemäße Gassack wird in einem Fahrzeug so angeordnet, daß die zweite Kammer einer A-Säule der Fahrzeugkarosserie zugewandt ist. Bei einem Fahrer-Gassack für ein Fahrzeug mit dem Lenkrad auf der linken Seite befindet sich die zweite Kammer, in der Fahrtrichtung betrachtet, auf der linken Seite des Gassacks, und bei einem Beifahrer-Gassack befindet sich die zweite Kammer auf der rechten Seite des Gassacks. Diese Anordnung berücksichtigt die bei einem Unfall auf den Fahrzeuginsassen einwirkenden Kräfte, insbesondere die aus der Verwendung eines üblichen Dreipunkt-Sicherheitsgurtes resultierenden Bewegungen und die aus einer eventuellen Drehung des Fahrzeugs bei einem Unfall resultierenden Bewegungen. Der Sicherheitsgurt verläuft schräg von der der Außenseite des Fahrzeugs zugewandten Schulter des Fahrzeuginsassen über den Brustkorb hin zum Becken. Hieraus resultiert eine sehr große Rückhaltewirkung für die der Außenseite des Fahrzeugs zugewandte Schulter, während die auf der Innenseite liegende Schulter weniger zurückgehalten wird. Bei einer starken Verzögerung ergibt sich im oberen Bereich des Brustkorbs eine Bewegung, die leicht zur Außenseite des Fahrzeugs hin gerichtet ist. Hieraus resultiert, daß der Kopf des Fahrzeuginsassen tendenziell Richtung A-Säule verlagert wird. Die auf der Außenseite der ersten Kammer des erfindungsgemäßen Gassacks angeordnete zweite Kammer wirkt dem in besonders vorteilhafter Weise entgegen.

Vorteilhafte Ausgestaltungen der Erfindung ergeben sich aus den Unteransprüchen.

Die Erfindung wird nachfolgend anhand einer bevorzugten Ausführungsform beschrieben, die in den beigefügten Zeichnungen dargestellt ist. In diesen zeigen:

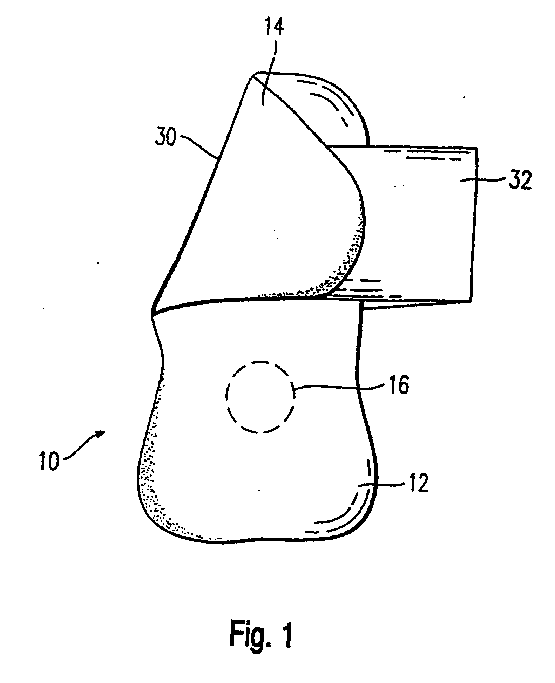

- Figur 1 einen Gassack im drucklosen, flach ausgebreiteten Zustand;
- Figur 2 einen erfindungsgemäßen Gassack im entfalteten Zustand in einem schematisch angedeuteten Fahrzeug; und
- Figur 3 eine perspektivische Ansicht des entfalteten Gassacks von Figur 2.

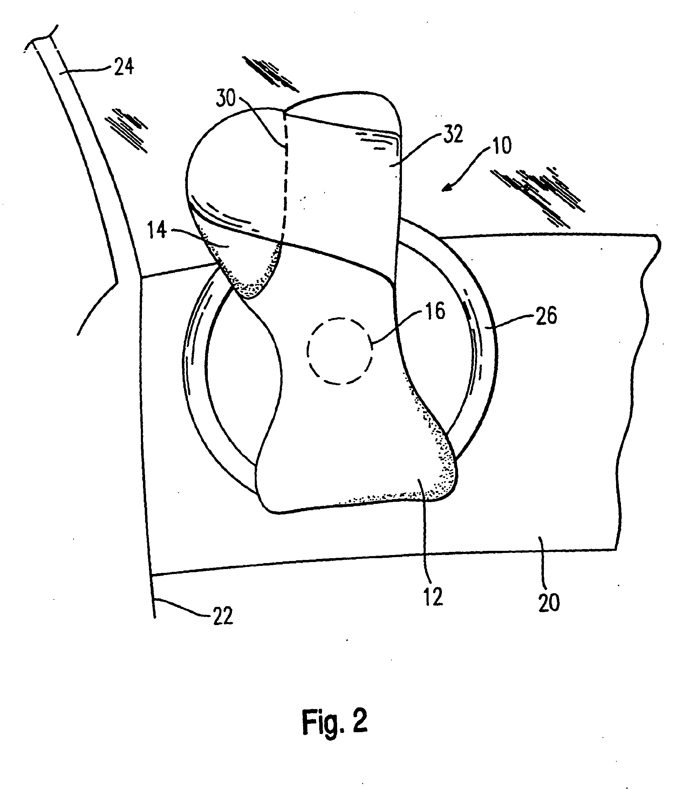

Der Gassack 10 weist eine erste Kammer 12 und eine zweite Kammer 14 auf. Die erste Kammer ist allgemein langgestreckt und, wie insbesondere in Figur 2 zu sehen ist, leicht tailliert, und die zweite Kammer 14 ist nach Art eines Ohres seitlich an die erste Kammer 12 angesetzt. Bezüglich der in Figur 2 gezeigten Einbaulage des entfalteten Gassacks ist die zweite Kammer am oberen Ende der ersten Kammer angesetzt. Zwischen der ersten und der zweiten Kammer 12, 14 des Gassacks besteht eine Strömungsverbindung, so daß Druckgas, das über eine Einströmöffnung 16 in die erste Kammer einströmt, teilweise auch in die zweite Kammer überströmt und diese entfaltet.

In Figur 2 ist der Gassack eingebaut in einem Fahrzeug gezeigt, von dem hier ausschnittsweise ein Teil eines Armaturenbretts 20, ein Teil einer Fahrzeugtür 22 und eine A-Säule 24 gezeigt sind. Der Gassack 10 ist Teil eines Fahrer-Gassackmoduls, das in einem Lenkrad 26 angebracht ist. Um zu gewährleisten, daß der Gassack im entfalteten Zustand unabhängig von einer Drehung des Lenkrades immer in derselben Ausrichtung relativ zum zurückzuhaltenden Fahrer positioniert ist, ist das Gassackmodul derart drehbar am Lenkrad 26 angebracht, daß die Längsrichtung der ersten Kammer des entfalteten Gassacks immer vertikal verläuft. Ein solches Gassackmodul ist in dem deutschen Gebrauchsmuster 297 02 441 beschrieben, auf dessen Offenbarung insoweit Bezug genommen wird.

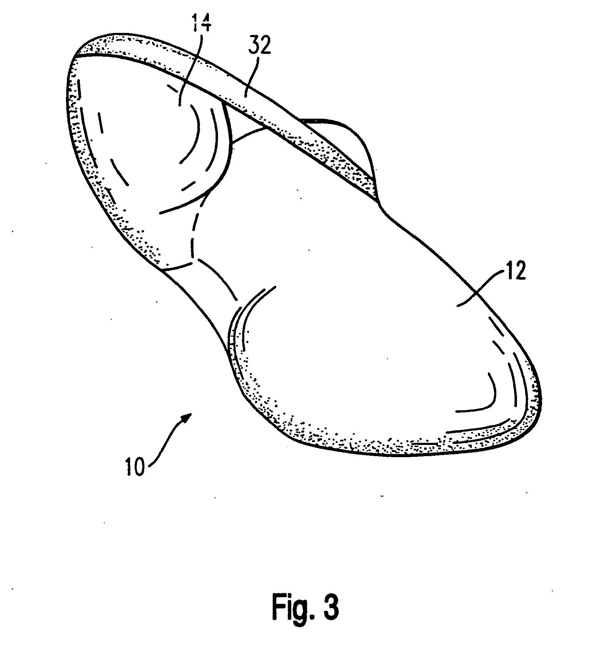

Die Verbindungslinie 30 zwischen der ersten Kammer 12 des Gassacks und der zweiten Kammer ist scharnierartig ausgebildet, so daß die zweite Kammer 14 begrenzt gegenüber der ersten Kammer abgeklappt werden kann. Auf der Außenseite des Gassacks ist ein Fangband 32 angebracht, das mit der zweiten Kammer 14 auf deren Außenseite verbunden ist, sich über die dem Fahrer zugewandte Seite der zweiten Kammer, über einen Teil der Fläche der ersten Kammer 12 erstreckt und mit der ersten Kammer auf deren Außenseite vernäht ist. Das Fangband 32 ist dabei so kurz ausgeführt, daß es bei entfaltetem Gassack die zweite Kammer 14 zur ersten Kammer 12 hin zieht. Dies ist in Figur 3 deutlich zu sehen; das Fangband 32 ist so kurz, daß die Kammer 14 leicht abgeklappt ist und das Fangband 32 sich im Bereich des Übergangs von der zweiten Kammer 14 zur ersten Kammer 12 im Abstand von der Wandung des Gassacks erstreckt.

Das Fangband 32 wirkt als Fang- bzw. Aufprallfläche für den Kopf eines Fahrzeuginsassen, wobei die zweite Kammer beim Aufprall des Kopfes des Fahrzeuginsassen auf das Fangband 32 noch stärker zur Mitte des Gassacks und zur ersten Kammer hin gezogen wird. Auf diese Weise ergibt sich eine verbesserte Abstützung für den Kopf des Fahrzeuginsassen auf der der A-Säule 24 zugewandten Seite, so daß ein Kontakt zwischen A-Säule und Kopf des Fahrzeuginsassen zuverlässig verhindert ist.

Der Gassack kann in einer alternativen Ausführungsform auch auf der Beifahrerseite verwendet werden. In diesem Fall wird die zweite Kammer 14 spiegelbildlich an der ersten Kammer 12 angebracht, so daß sie wiederum auf der Seite des Gassacks liegt, die der Außenseite der Fahrzeugkarosserie und damit der A-Säule zugewandt ist. Bei einem solchen Beifahrer-Gassackmodul vereinfacht sich die Anbringung des Gassackmoduls, da das Modul feststehend im Armaturenbrett angebracht werden kann.

Bei Fahrzeugen mit dem Lenkrad auf der rechten Seite des Fahrzeugs wird der Gassack natürlich spiegelbildlich zu den obigen Ausführungsformen ausgeführt, also auf der Fahrerseite mit der zweiten Kammer 14 auf der rechten Seite des Gassacks und auf der Beifahrerseite mit der zweiten Kammer auf der linken Seite des Gassacks.

## Patentansprüche

1. Gassack (10) für ein Fahrzeuginsassen-Rückhaltesystem, der aus einem zusammengelegten Zustand in einen entfalteten Zustand überführt werden kann, mit einer ersten Kammer (12), die eine Einblasöffnung (16) aufweist, und einer zweiten Kammer (14), die mit der ersten Kammer (12) in Strömungsverbindung steht, **dadurch gekennzeichnet, daß** die erste Kammer (12) im entfalteten Zustand allgemein langgestreckt ist und die zweite Kammer (14) mit der ersten Kammer an einer Seitenfläche der ersten Kammer verbunden ist, so daß der Gassack asymmetrisch ist, und daß ein Fangband (32) vorgesehen ist, das sich über die Außenseite der zweiten Kammer und über einen Teil der Außenseite der ersten Kammer (12) erstreckt.

2. Gassack nach Anspruch 1, **dadurch gekennzeichnet, daß** das Fangband (32) sich etwa quer zur Längsrichtung der zweiten Kammer (14) erstreckt.

3. Gassack nach Anspruch 1 oder Anspruch 2, **dadurch gekennzeichnet, daß** das Fangband (32) sich auf der einem Fahrzeuginsassen zugewandten Seite des Gassacks (10) befindet.

4. Gassack nach einem der vorhergehenden Ansprüche, **dadurch gekennzeichnet, daß** die zweite Kammer (14) an der ersten Kammer (12) scharnierartig befestigt ist, so daß die zweite Kammer (14) bezüglich der ersten abgeklappt werden kann.

5. Gassack nach einem der vorhergehenden Ansprüche, **dadurch gekennzeichnet, daß** das Fangband (32) im entfalteten Zustand des Gassacks (10) wenigstens teilweise im Abstand von der ersten Kammer (12) verläuft.

6. Baugruppe bestehend aus einem Gassack nach einem der vorhergehenden Ansprüche und einer Fahrzeugkarosserie (20, 22, 24), **dadurch gekennzeichnet, daß** der Gassack (10) hinsichtlich seiner Ausrichtung im entfalteten Zustand feststehend im Fahrzeug angebracht ist und daß die zweite Kammer (14) des Gassacks sich auf der bezüglich der Fahrzeugkarosserie außenliegenden Seite des Gassacks befindet.

7. Baugruppe nach Anspruch 6, **dadurch gekennzeichnet, daß** der Gassack Teil eines Fahrer-Gassackmoduls ist und das Modul an einem Fahrzeug-Lenkrad (26) so angeordnet ist, daß seine Ausrichtung relativ zur Fahrzeugkarosserie unabhängig von einer Drehung des Lenkrades ist.

8. Baugruppe nach Anspruch 6, **dadurch gekennzeichnet, daß** der Gassack Teil eines Beifahrer-Gassacksmoduls ist.

## Claims

1. A gas bag (10) for a vehicle occupant restraint system, which gas bag can be transferred from a folded condition into a deployed condition, comprising a first chamber (12) which has an inflation opening (16), and a second chamber (14) which is in fluid communication with the first chamber (12), **characterized in that** in the deployed condition the first chamber (12) is generally elongate and the second chamber (14) is connected with the first chamber at a side face of the first chamber, so that the gas bag is asymmetrical, and that a limiting strap (32) is provided which extends across the outside of the second chamber and across part of the outside of the first chamber (12).

2. The gas bag as claimed in claim 1, **characterized in that** the limiting strap (32) extends approximately transverse to the longitudinal direction of the second chamber (14).

3. The gas bag as claimed in claim 1 or claim 2, **characterized in that** the limiting strap (32) is disposed on the side of the gas bag (10) facing a vehicle occupant.

4. The gas bag as claimed in any of the preceding claims, **characterized in that** the second chamber (14) is attached to the first chamber (12) in the manner of a hinge, so that the second chamber (14) can be folded down with respect to the first one.

5. The gas bag as claimed in any of the preceding claims, **characterized in that** in the deployed condition of the gas bag (10) the limiting strap (32) extends at least partly at a distance from the first chamber (12).

6. An assembly consisting of a gas bag as claimed in any of the preceding claims and a vehicle body (20, 22, 24), **characterized in that** as regards its orientation, the gas bag (10) is mounted so as to be stationary in the vehicle in the deployed condition, and that the second chamber (14) of the gas bag is disposed on that side of the gas bag which is external with respect to the vehicle body.

7. The assembly as claimed in claim 6, **characterized in that** the gas bag is part of a driver gas bag module and the module is arranged at a vehicle steering wheel (26) in such a manner that its orientation relative to the vehicle body is independent of a rotation of the steering wheel.

8. The assembly as claimed in claim 6, **characterized in that** the gas bag is part of a front passenger gas bag module.

## Revendications

1. Coussin à gaz (10) pour un système de retenue d'occupants de véhicule, qui peut être amené depuis un état replié jusque dans un état déployé, comportant une première chambre (12) qui présente un orifice d'insufflation (16) et une deuxième chambre (14) qui est en liaison d'écoulement avec la première chambre (12), **caractérisé en ce que** la première chambre (12) est en général allongée à l'état déployé et la deuxième chambre est reliée à la première chambre sur une face latérale de la première chambre, de sorte que le coussin à gaz est asymétrique, et **en ce qu'**il est prévu une bande de garde (32) qui s'étend sur la face extérieure de la deuxième chambre et sur une partie de la face extérieure de la première chambre (12).

2. Coussin à gaz selon la revendication 1, **caractérisé en ce que** la bande de garde (32) s'étend approximativement transversalement à la direction longitudinale de la deuxième chambre (14).

3. Coussin à gaz selon la revendication 1 ou 2, **caractérisé en ce que** la bande de garde (32) se trouve sur le côté du coussin à gaz (10), qui est détourné d'un passager du véhicule.

4. Coussin à gaz selon l'une des revendications précédentes, **caractérisé en ce que** la deuxième chambre (14) est fixée à la manière d'une charnière sur la première chambre (12) de telle sorte que la deuxième chambre (14) peut être rabattue par rapport à la première.

5. Coussin à gaz selon l'une des revendications précédentes, **caractérisé en ce que** la bande de garde (32) s'étend, à l'état déployé du coussin à gaz (10), au moins partiellement à distance de la première chambre (12).

6. Ensemble constitué par un coussin à gaz selon l'une des revendications précédentes, et par une carrosserie de véhicule (20, 22, 24), **caractérisé en ce que** du point de vue de son orientation, le coussin à gaz (10) à l'état déployé est monté stationnaire dans le véhicule et **en ce que** la deuxième chambre (14) du coussin à gaz se trouve sur la face située à l'extérieur du coussin à gaz par rapport à la carrosserie du véhicule.

7. Ensemble selon la revendication 6, **caractérisé en ce que** le coussin à gaz fait partie d'un module de coussin à gaz de conducteur et le module est agencé sur un volant de direction (26) de véhicule de telle sorte que son orientation par rapport à la carrosserie du véhicule est indépendante d'une rotation du volant de direction.

8. Ensemble selon la revendication 6, **caractérisé en ce que** le coussin à gaz fait partie d'un module de coussin à gaz de passager.
